# EUROPEAN PATENT APPLICATION

(11) **EP 4 520 688 A1**
(43) Date of publication of application: **12.03.2025**
(21) Application number: 24198994.6
(22) Date of filing: 06.09.2024
(51) Int. Cl.: B65G 1/04, B65G 1/137, B65G 47/52, B65G 47/54, B65G 47/91, B65B 13/00

(54) **HANDLING SYSTEM AND METHOD**

(30) Priority: 08.09.2023 IT 202300018462
(71) Applicant: SACMI TECH S.p.A., 40026 Imola (BO) (IT)
(72) Inventor: BARDI, Federico, 40026 IMOLA (BO) (IT); TARDINI, Giovanni, 40026 IMOLA (BO) (IT); STEFANI, Roberto, 40026 IMOLA (BO) (IT)
(74) Representative: Studio Torta S.p.A.

(57) **Abstract**

A handling method and system (1) for substantially flat articles (2) to form an order to be shipped (3), which involve: a plurality of storage units (5), each comprising at least one substantially flat article (2) of a given type; a first conveyor (6); a second conveyor (10), which extends downstream of the first conveyor (6) orthogonally to the first conveyor (6); a first gripping device (9) to take a substantially flat article (2) from one of the storage units (5) and release it onto the first conveyor (6); a forming unit (12) to form an order to be shipped (3); and a second gripping device (14) to take the substantially flat article (2) from the second conveyor (10) and release it so that it rests on a support (13) of the forming unit (12).

## Description

### CROSS-REFERENCE TO RELATED APPLICATIONS

This patent application claims priority from Italian patent application no. 102023000018462 filed on September 8, 2023, the entire disclosure of which is incorporated herein by reference.

### TECHNICAL FIELD

This invention relates to a handling system and method for handling substantially flat articles; more specifically, substantially flat ceramic articles such as, for example, ceramic slabs or tiles.

Even more advantageously but without imposing limits, this invention relates to a handling system and method that is particularly suitable for handling, or moving from one place to another, substantially flat articles in order to form an order to be shipped; more specifically, a multi-reference order to be shipped, or formed from a plurality of substantially flat articles that (at least some of which) have different features, for example different colours, aesthetic designs, formats, and/or materials.

### BACKGROUND OF THE INVENTION

In the field of handling substantially flat articles, in particular substantially flat ceramic articles, it is known, after forming the articles in special industrial processes, to transport the articles to special storage warehouses, where the articles are stored, possibly after organising them into groups and/or placing them on special supports, for example support pallets or racks, until they are shipped, before removing, again, these articles and transferring them to additional processing stations, for example sorting or packaging stations, etc., when it is necessary to form an order to be shipped. In other cases, for example when there is not enough space for storing the articles, the formation of orders to be shipped is planned so as to occur directly at the end of the line, or immediately after having formed the substantially flat articles.

Some known handling and/or storage systems for articles are, for example, described in the patents: IT202100024594A1, DE102018114026, and DE102021116485A1A1.

In any case, the handling process for substantially flat articles to form orders to be shipped has some intrinsic critical issues linked to the dimensions of handling systems and any storage systems, as well as to all the issues linked to the logistics of substantially flat articles and to subsequent operations for organising these articles to form orders to be shipped. These issues are amplified in the case of handling substantially flat articles with large dimensions and/or in the case wherein the order to be shipped is a multi-reference order.

There is, therefore, an ever greater need to identify handling methods and systems that enable safe and fast handling of articles so as free up, as quickly as possible, the production lines or storage warehouses and enable a fast and effective formation of orders to be shipped.

Precisely because of this, over the years, handling systems for flat articles have been developed that involve collecting the flat articles, typically by means of special gripping devices, for example equipped with suction cups or grippers, which are manually driven, for example when they are integrated into gripping vehicles, or automatically, to transfer the articles, possibly with the support, from the storage warehouse or production line, towards subsequent processing stations, where the articles are first suitably grouped, generally manually, to form orders to be shipped and are then packaged, for example by winding them with packaging film and/or with holding straps to ensure their position.

These operations are the more problematic the further apart are the storage warehouse, or the end of the production line, and the additional processing stations. During transport, in fact, you run the risk of damaging the flat articles, especially in the case of articles made of materials that are particularly fragile like, for example, ceramics or glass, and/or when the articles to be transported are particularly large, thus more subject to risks of bending and breaking.

These problems are combined with those relating to the time and costs connected with the manual operations that may be required in the various processing stations, as well as the issues linked to the need to isolate the space for moving the gripping devices during their operation, to avoid the risk that any accidents may prove hazardous for the operators who operate in this area.

In order to overcome part of these problems, solutions were developed that involve that at least part of the movement of the articles occurs with the articles resting on a sliding trolley or on a transport conveyor. This entails, however, an increase in the dimensions of the handling system and its rigidity, which is not always compatible with the spaces and shape of the rooms intended to house these handling systems, but also an increase in the time necessary for handling the articles with a resulting increase in the time necessary for forming an order to be shipped.

The purpose of this invention is to provide a handling system and method for substantially flat articles, which make it possible to overcome, at least partially, the drawbacks of the prior art, proposing an alternative solution that makes it possible to automate the flat article handling operations quickly and safely, while restricting the dimensions and time necessary for forming an order to be shipped.

### SUMMARY

In accordance with this invention, an article handling system and method for handling substantially flat articles in order to form an order to be shipped are provided, according to what is claimed in the appended independent claims, and preferably, in any one of the claims depending directly or indirectly on the above-mentioned independent claims.

The claims describe preferred embodiments of this invention forming an integral part of this description.

### BRIEF DESCRIPTION OF THE DRAWINGS

The invention is described below with reference to the accompanying drawings that show some non-limiting embodiments of it, wherein:
- Figure 1 is a perspective view of a handling system for flat ceramic articles in accordance with a first embodiment of this invention;
- Figure 2 is a plan view of the handling system in Figure 1;
- Figure 3 is a side view of the handling system in Figures 1 and 2;
- Figure 4 represents an enlarged scale view of part of the handling system illustrated in Figures 1 to 3;
- Figure 5 represents an enlarged scale view of an additional part of the handling system illustrated in Figures 1 to 3; and
- Figure 6 represents an enlarged scale view of an integrity control station that is part of the handling system illustrated in the previous figures.

### DETAILED DESCRIPTION

In the attached figures, reference number 1 indicates, as a whole, a handling system for handling substantially flat articles 2 in order to form at least one order to be shipped 3.

In this discussion, the term "handling" means all the operations involving taking, moving, positioning, and organising into groups the substantially flat articles 2; more advantageously, the term "handling" means all the operations needed to form an order to be shipped 3, including a plurality of substantially flat articles 2, possibly different ones, for example due to their colour, format, etc., more advantageously, organised (or arranged according to a defined criterion and/or orientation) on a support 4, which advantageously but without imposing limits is a rack, as illustrated in the attached figures, or a pallet, or a crate.

Advantageously, but not necessarily, the substantially flat articles 2 referred to in this discussion are plate-shaped articles 2, which have two dimensions that are much greater than the third dimension, or have dimensions in plan that are much greater than the thickness. More specifically, advantageously but without imposing limits, each of these substantially flat articles 2 comprises two main surfaces that are parallel, face each other, and connected by at least four side surfaces orthogonal to the main surfaces and in pairs that are parallel and face each other; in other words, advantageously but without imposing limits, each of these (substantially) flat articles 2 has a (substantially) parallelepiped shape.

Even more advantageously but without imposing limits, the substantially flat articles 2 are articles 2 from the ceramics processing sector like, for example, ceramic slabs and/or tiles or piles or bundles of ceramic slabs and/or tiles of the same type.

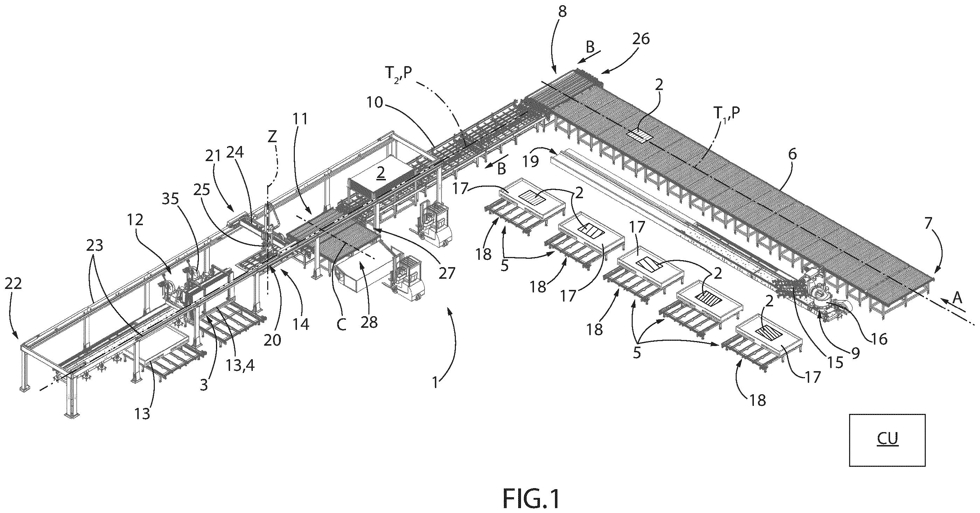

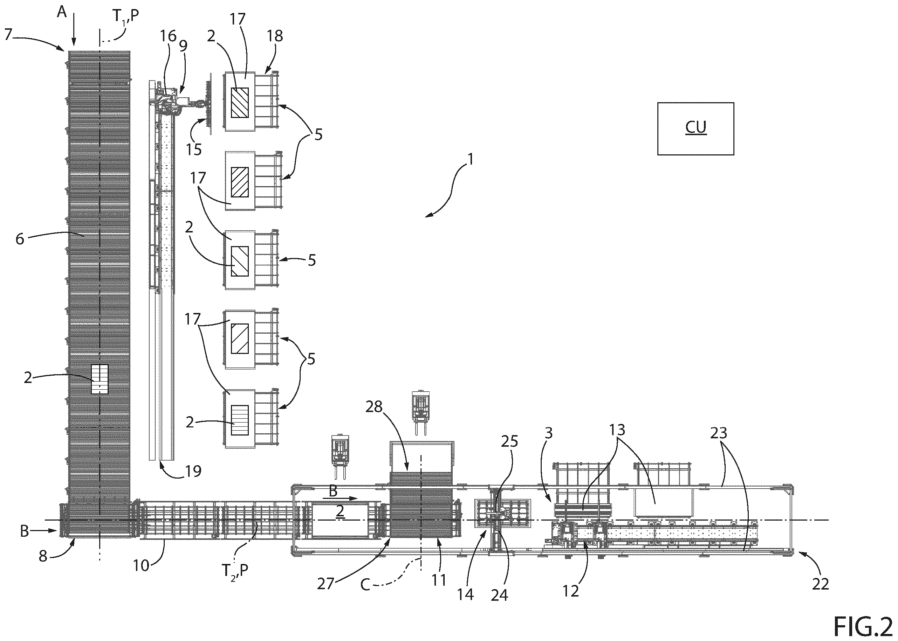

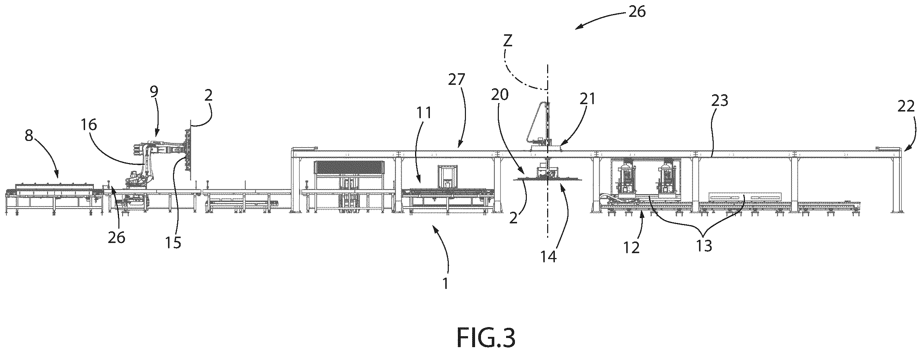

With particular reference to Figures 1 to 3, advantageously, the handling system 1 comprises a plurality of storage units 5, each comprising at least one substantially flat article 2 of a certain type, in particular a pile of substantially flat articles 2 of a certain type (as illustrated in the attached figures); a conveyor 6 that extends from an inlet station 7 to an intermediate station 8 in a conveying direction A along a section T1 of a given path P and is configured to support and convey at least one substantially flat article 2 along this section T1 of the given path P; a gripping device 9 operationally interposed between the storage units 5 and the conveyor 6 and which can be operated to hold at least one substantially flat article 2 from one of the storage units 5 and release it on this conveyor 6.

According to some advantageous but non-limiting embodiments, the conveyor 6 comprises (in particular, is) a conveyor system, for example, in the example illustrated, a roller conveyor.

Advantageously, the handling system 1 also comprises: an additional conveyor 10 that extends from the intermediate station 8 to an additional station 11 in a conveying direction B, orthogonal to the conveying direction A, and is configured to support and convey at least one substantially flat article 2 along a second section T2 of the above-mentioned given path P; a forming unit 12 to form an order to be shipped 3, which comprises at least one support 13 intended to receive at least one substantially flat article 2 to be shipped; and an additional gripping device 14 operationally interposed between the conveyor 10 and the forming unit 12 and which can be operated to take a substantially flat article 2 from the conveyor 10 (in particular, from the station 11) and release it so that it rests on the support 13 of the forming unit 12.

Advantageously but without imposing limits, the handling system 1 comprises a control unit CU configured to control the driving and operation of the monitoring system 1 so as to enable the automatic formation of the order to be shipped 3. According to some advantageous but non-limiting embodiments, the control unit CU is configured to receive, for example by means of a user interface or by means of a connection, for example a wireless one, with other control systems (not illustrated), data regarding the order to be shipped 3 that must be formed (in particular, these data comprise at least the number and type of substantially flat articles 2 that must form this order to be shipped 3) so as to control, as a result, at least the gripping device 9, in particular all the various components of the handling system 1 so as to form the order to be shipped 3.

In particular, advantageously but without imposing limits, in use, the control unit CU is configured to operate: the gripping device 9 so that it takes at least one substantially flat article 2 of a given type from one of the storage units 5 and releases it onto the conveyor 6; the conveyor 6 so as to convey this substantially flat article 2 towards the intermediate station 8; the conveyor 10 so as to convey this substantially flat article 2 from the intermediate station 8 towards the station 11; and the gripping device 14 so that it takes the substantially flat article 2 from the conveyor 10 and replaces it on the support 13 of the forming unit 12.

Even more advantageously but without imposing limits, the control unit CU is configured to operate: the gripping device 9 so that this takes, potentially in subsequent steps (operations), from the respective storage stations 5 a given number of substantially flat articles 2 of a given type based on data regarding the order to be shipped 3 to be formed; the conveyors 6 and 10 so that they convey these substantially flat articles 2 along the given path P to the station 11; and the gripping device 14 to transfer each of these substantially flat articles 2 from the conveyor 10 on the support 13 of the forming unit 12.

According to some advantageous but non-limiting embodiments, the forming unit 12 comprises at least two supports 13, of the same or a different type (as in the case illustrated in the attached figures) and the gripping device 14 is configured to position each substantially flat article 2 selectively on one or another support 13 based on the type of order to be shipped 3. Even more advantageously but without imposing limits, in this case, the control unit CU is configured to control the gripping device 14 so that this selectively releases each substantially flat article 2 on one or another support 13.

According to some advantageous but non-limiting embodiments, the gripping device 9 comprises: a first gripping head 15, which is configured to grab and release at least one substantially flat article 2; and a moving body 16, which is movable in a work area extending at least between the storage units 5 and the conveyor 6 so as to allow the transfer of substantially flat articles 2 between the storage units 5 and the conveyor 6.

This work area of the gripping device 9 is the area inside which this gripping device 9 can move to take or release substantially flat articles 2. Advantageously but without imposing limits, this work area comprises at least part of the storage units 5 so that this gripping device 9 can take a substantially flat article 2 from one storage unit 5, based on the order to be shipped 3 to be formed, and at least part of the conveyor 6 to be able to release the articles 2 taken onto it.

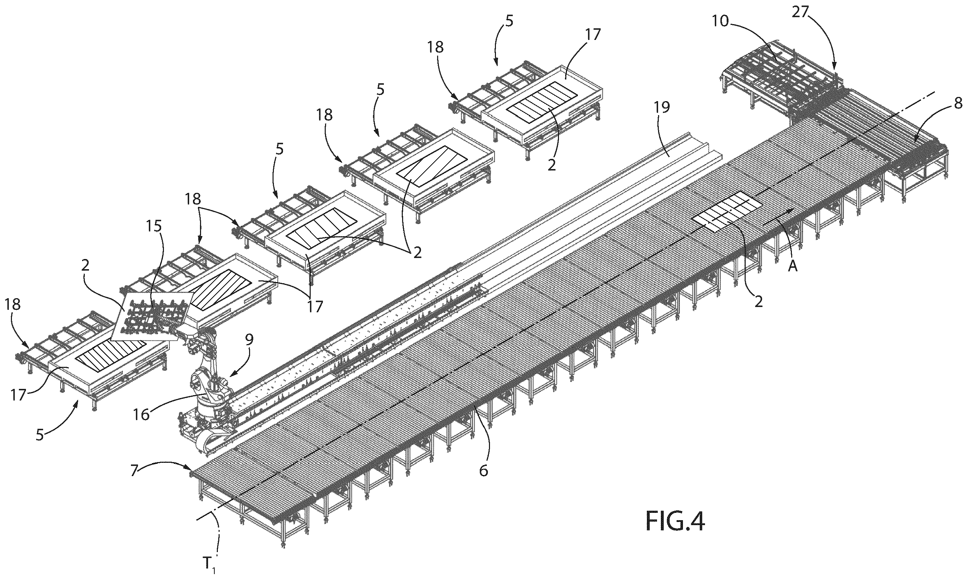

According to some advantageous but non-limiting embodiments like, for example, that illustrated in the attached figures (see, in particular, Figure 4), each storage unit 5 comprises a support 17, for example a pallet, to support the substantially flat article 2 or the pile of substantially flat articles 2 of a given type and a moving assembly 18, advantageously but without imposing limits with tracks, configured to move this support 17 between a first position inside this work area of the gripping device 9 and a second position outside this work area. Even more advantageously but without imposing limits, the moving assembly 18 is able to move the support 17 along a direction parallel to the conveying direction B, drawing closer to or further away from the conveyor 6 moving, respectively, from the second position to the first position or vice versa.

This configuration makes it possible to position the substantially flat articles 2 on each storage unit 5, in particular on the support 17, when this support 17 is in the first position outside the work area of the gripping device 9 and, subsequently, by means of the moving assembly 18, to move this support 17 towards the first position where the substantially flat articles 2 can be taken by the first gripping device 9. This makes it possible, therefore, to reload each storage unit 5 completely safely even while the gripping device 9 takes the substantially flat articles from the adjacent storage units 5, eliminating the need to stop the handling operations for the time necessary to resupply the storage units 5, with a resulting increase in the efficiency of the handling system 1.

Alternatively or in combination, advantageously but without imposing limits, the storage units 5 are arranged aligned with each other to form a row parallel to the conveying direction A (see, for example, Figures 1, 2, and 4); even more advantageously but without imposing limits, these storage units 5 are arranged on one side of the conveyor 10. According to some advantageous but non-limiting embodiments, in this case (or when the storage units 5 are placed on one side of the conveyor 10), the handling system 1 comprises a track 19, which is known, extending parallel to the conveying direction A, more advantageously between the conveyor 6 and the row of storage units 5; and the moving body 16 of the gripping device 9 is slidably coupled to this track 19 to enable the movement of the gripping head 15 inside the above-mentioned work area.

According to some advantageous but non-limiting embodiments, like, for example, those illustrated in the attached figures, the moving body 16 comprises (in particular, is) an anthropomorphic robot.

Advantageously but without imposing limits, the gripping head 15 comprises one or more suction cups that can be selectively operated to take or release at least one substantially flat article 2. Even more advantageously but without imposing limits, the gripping head 15 comprises an articulated parallelogram that supports a plurality of suction cups placed at a mutual distance from each other that can be adjusted, for example depending on the format of the substantially flat article 2, suitably deforming the articulated parallelogram and/or adjusting the length of its branches in a known way.

Alternatively or in combination, according to some embodiments not illustrated, the gripping head 15, instead of the plurality of suction cups, comprises a plurality of suction heads that can be selectively operated to take or release a substantially flat article.

According to other non-limiting embodiments not illustrated, the gripping head 15 comprises (in particular, is formed from) grippers.

According to some advantageous but non-limiting embodiments (like, for example, those illustrated in the attached figures), the gripping device 14 comprises: a gripping head 20 configured to grasp and release at least one substantially flat article 2; and a supporting structure 21 configured to carry, hanging, the gripping head 20 and enable its movement in a work area that extends at least between the conveyor 10 and the forming unit 12 so as to enable the transfer of the substantially flat articles 2 from this conveyor 10, in particular from the station 11 to the forming unit 12.

Advantageously but without imposing limits, the gripping head 20 of the gripping device 14 is similar to the gripping head 15 of the gripping device 9; thus, the same considerations mentioned above are true for the gripping head 15.

Advantageously but without imposing limits, the support structure 21 comprises (in particular, is formed from): a frame 22 that has at least one guide 23 (more advantageously, a pair of guides 23, as in the embodiment illustrated, each) extending parallel to the conveying direction B; a beam 24 slidably coupled to the guide 23 (in particular, to the pair of guides 23); and a known connection assembly 25, which is slidably coupled to the beam 24 and is configured to support the gripping head 20 so as to enable its movement along a direction Z, orthogonal both to the conveying direction A and to the conveying direction B. More specifically, this connection assembly 25 is configured to enable the movement of the gripping head 20 along the vertical direction Z to enable the movement of the gripping head 20 closer to/further away from the conveyor 10 and the above-mentioned at least one support 13 of the forming unit 12.

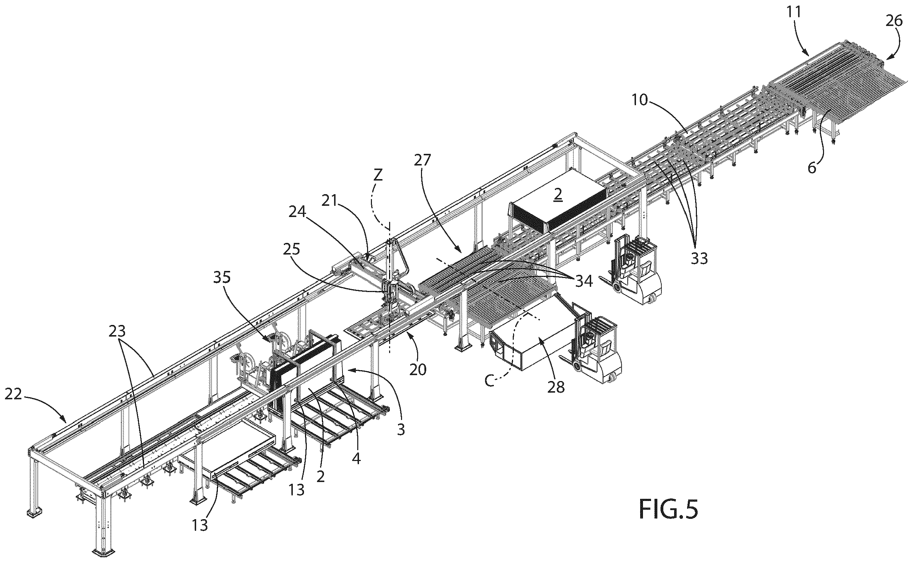

According to some advantageous but non-limiting embodiments, the connection assembly 25 comprises a joint to enable, if necessary, the rotation of the gripping head 20, for example, to enable the arrangement of the substantially flat article 2 edgeways, or resting on one of the side surfaces (see, for example, Figures 1 and 5 which illustrate an order to be shipped 3 that has substantially flat articles 2 placed edgeways).

Alternatively, or in addition, according to some advantageous but non-limiting embodiments, the support structure 21 of the gripping device 14 comprises (more specifically, is composed of) a three-axis Cartesian robot.

According to some advantageous but non-limiting embodiments, the handling system 1 comprises an integrity control assembly 26 configured to inspect the substantially flat article 2 (in particular, each substantially flat article 2) that moves along the above-mentioned given path P and to identify any defects, thus identifying any defective articles 2; and a rejection device 27 that can be operated, based on what is detected by the integrity control assembly 26, to transfer any defective articles 2 (or articles 2 that have defects) to a rejection station 28.

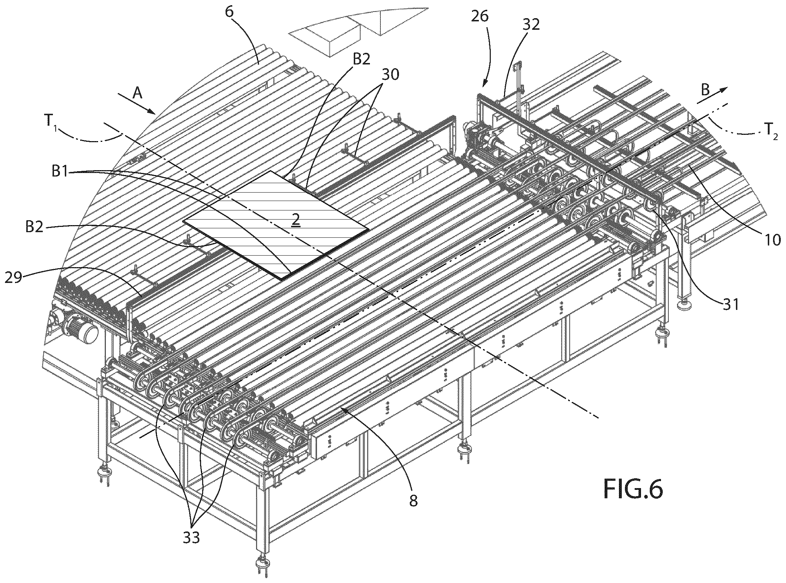

With particular reference to Figure 6, advantageously but without imposing limits, the integrity control assembly 26 is arranged at the intermediate station 8 and comprises a gantry 29 extending above the conveyor 6 and supports at least one detector 30 (in particular, in the attached figure, a plurality of detectors 30, each) configured to inspect the transverse edges B1 of the substantially flat article 2 (in particular, of each substantially flat article 2 that moves on the conveyor 6), while this moves forward on the conveyor 6 along the section T1 of the given path P; or, the edges B1 that, in use (or while the article 2 moves forward along the section T1 in the conveying direction A), extend perpendicularly to the direction A and parallel to the conveying direction B; and a second gantry 31 extending above the conveyor 10 and supporting at least one additional detector 32 configured to inspect the longitudinal edges B2 of the substantially flat article 2 (in particular, of each substantially flat article 2 that moves on the conveyor 10), or the edges B2 that, in use (or while the article 2 is moved forward along the section T2 in the conveying direction B), extend orthogonally to the conveying direction B and parallel to the conveying direction A.

The reciprocal arrangement of the conveyors 6 and 10, orthogonal to each other, makes it possible (among other things) to inspect the edges B1, B2 of each substantially flat article 2 while this moves forward on the conveyors 6 and 10 along the given path P in a simple way, without needing to rotate the articles 2 as happens in some known handling systems and without the need for detection systems and those for composing highly sophisticated images. This makes it possible to limit the complexity of the monitoring system 1 with the same efficacy with clear economic benefits and benefits for scheduling maintenance of the monitoring system 1.

According to some advantageous but non-limiting embodiments (like, for example, that illustrated in the attached figures), the rejection device 27 is operationally connected to the conveyor 10. Alternatively or in addition, advantageously but without imposing limits, the conveyor 10 comprises (in particular, is composed of) a plurality of belts 33 extending parallel to the conveying direction B and defining a transport plane; and the rejection device 27 comprises a series of rollers 34 extending parallel to the conveying direction B that are arranged in succession along a direction C perpendicular to the direction B (and, advantageously but without imposing limits, parallel to the conveying direction A) between the belts 33. The rejection device 27 also comprises moving means (not visible in the attached figures and known) configured to move the plurality of rollers 34 between a rest position, wherein the rollers 34 are placed at a lower level with respect to the level of the belts 33 so as not to interfere with the transport plane, and an operating position wherein the rollers 34 are raised to a level at least equal to that of the belts 33 to receive the substantially flat article 2 resting on (in particular, for taking up from) the transport plane and convey it towards the rejection station 28.

Alternatively or in addition, according to some advantageous but non-limiting embodiments not illustrated, the conveyor 10 comprises (in particular, is composed of) a plurality of rollers (in particular, these rollers are provided instead of the above-mentioned belts 33 or in combination with these belts 33). In this case too, advantageously but without imposing limits, the rejection device 27 comprises: a series of rollers 34 extending parallel to the conveying direction B and are arranged in succession along a direction C perpendicular to the direction B (and, advantageously but without imposing limits, parallel to the conveying direction A) between the rollers, moving means (not visible in the attached figures and known) configured to move the plurality of rollers 34 between a rest position, wherein the rollers 34 are placed at a lower level with respect to the level of the rollers so as not to interfere with the transport plane, and an operating position wherein the rollers 34 are raised to a level at least equal to that of the rollers to receive the substantially flat article 2 resting on (in particular, to take up from) the transport plane and convey it towards the rejection station 28.

According to some advantageous but non-limiting embodiments (like, for example, the one illustrated in the attached figures), the support 13 (in particular, at least one of the supports 13) of the forming unit 12 is configured to receive the substantially flat article 2 arranged edgeways. In particular, the support 13 (or each of at least one of the supports 13) is a support rack. In this case, advantageously but without imposing limits, the forming unit 12 comprises a strapping machine 35 (known and only partially and schematically illustrated in the attached figures but) configured to apply at least one sealing strap (for example, a band) around the substantially flat article 2 and to the support 4 that form the order to be shipped 3 to bind them together so as to ensure the stability of the order to be shipped 3.

According to some advantageous but non-limiting embodiments, in use, the control unit CU is configured to operate the strapping machine 35 when the order to be shipped 3 is completed to apply the sealing strap between the support 4 (for example, the rack) and the substantially flat articles 2 so as to increase the stability of the articles and avoid the risk of the substantially flat articles 2 falling.

It is, thus, possible to use supports 4 configured to receive the substantially flat articles 2 arranged edgeways, with resulting benefits in terms of dimensions with the same number of articles 2, ensuring greater stability of the order to be shipped 3.

Alternatively or in addition, according to some advantageous but non-limiting embodiments, the forming unit 12 comprises a packaging unit (not illustrated in the attached figures) and configured to wind the order to be shipped 3 with a packaging film or with die cut cardboard once formed.

According to some advantageous but non-limiting embodiments (like those illustrated in the attached figures), the support 13 comprises (in particular, coincides with) the support 4 of the order to be shipped 3. According to other embodiments, advantageous but non-limiting, in use, the support 13 of the forming unit 12 is intended to support the support 4, when the order to be shipped 3 comprises it.

Alternatively or in addition, according to some advantageous but non-limiting embodiments, the forming unit 12 also comprises a moving assembly, similar to the moving assembly 18, configured to move the support 13, or each of the supports 13, between a first position inside the work area of the gripping device 14 and a second position outside of this work area.

According to another aspect of this invention, a handling method is proposed for handling substantially flat articles 2 and forming an order to be shipped 3, which advantageously but without imposing limits is implemented with a handling system 1 in accordance with one of the embodiments described above.

Advantageously but without imposing limits, this handling method comprises: a feeding step, during which a plurality of storage units 5 is provided, each comprising at least one substantially flat article 2 of a given type and, advantageously but without imposing limits, a support 13 (advantageously but without imposing limits of the type described above) to support the at least one substantially flat article 2; a transfer step, during which a gripping device 9, advantageously but without imposing limits implemented according to one of the embodiments described above, selectively takes at least one substantially flat article 2 from one of the storage units 5 and releases it on a conveyor 6, advantageously but without imposing limits of the type described above, which extends from one inlet station 5 to an intermediate station 8 along a first section T1 of a given path P in a first conveying direction A; and a first conveying step, which advantageously but without imposing limits is (at least partially) subsequent to the first transfer step, during which the conveyor 6 moves the substantially flat article 2 towards the intermediate station 8 in the conveying direction A.

Advantageously, the handling method also comprises a second conveying step, during which a conveyor 10, advantageously but without imposing limits of the type described above, extending downstream of the conveyor 6 along the given path P defined by this intermediate station 8 to an additional station 11 in the above-mentioned conveying direction B, receives the substantially flat article 2 from the conveyor 6 and moves it towards the station 11 in the conveying direction B; and a forming step, during which a gripping device 14, advantageously but without imposing limits of the type described with respect to the handling system 1, takes the substantially flat article 2 from the conveyor 10 and transfers it to a forming unit 12 that comprises at least one support 13 and releases it on this support 13 for forming an order to be shipped 3.

According to some advantageous but non-limiting embodiments, the first transfer step comprises, in turn, a first transfer sub-step, during which the gripping device 9 takes a first substantially flat article 2 from one storage unit 5 of the plurality of storage units 5, and releases it onto the conveyor 6 and at least one second transfer sub-step, (at least partially) subsequent to the first transfer sub-step, during which the gripping device 9 takes at least one second substantially flat article 2 from a storage unit 5, which, advantageously but without imposing limits, can be the same from which the first article 2 is taken (when the order to be shipped 3 is intended to comprise two articles 2 of the same time) or may came from another storage unit 5 (when the order to be shipped 3 is a multi-reference order). In this case, advantageously but without imposing limits, during the above-mentioned conveying steps the conveyor 6 and the other conveyor 10 move the substantially flat articles 2 one after another, respectively, first towards the intermediate station 8 in the conveying direction A and then from the intermediate station 8 towards the third station 11 in the conveying direction B; and during the forming step, the gripping device 14 takes each substantially flat article 2 that arrives at the station 11 and transfers it to a support 13 of the forming unit 12, based on the type of order to be shipped 3 to be formed.

According to some advantageous but non-limiting embodiments, the forming step comprises an arrangement sub-step, during which the gripping device 14 positions the substantially flat article 2 (in particular, each substantially flat article 2 intended to form the order to be shipped 3) oriented edgeways on the support 13 (or on one of the supports 13); and a stabilization sub-step, (at least partially) subsequent to the arrangement sub-step, during which a strapping machine 35 applies a sealing strap around the substantially flat article 2 or the plurality of substantially flat articles 2 and the support 13 that form the order to be shipped 3 so as to bind them together.

According to some advantageous but non-limiting embodiments, the handling method comprises: an integrity control step, during which an integrity control assembly 26 inspects the substantially flat article 2 (in particular, each article 2 that moves on the conveyor 6) and identifies any defects, thus identifying any defective articles 2 (or articles 2 that have defects); and a rejection step (at least partially) subsequent to the integrity control step, during which a rejection device 27 is operated, based on what is detected by the integrity control assembly 26 and transfers any defective articles 2 from the conveyor 10 to a rejection station 28.

Even more advantageously but without imposing limits, the integrity control step involves: a first detection step during which at least one first detector 30, which is part of the integrity control assembly 26, and is arranged above the conveyor 6, advantageously but without imposing limits supported by the gantry 29 as described above, inspects the above-described transverse edges B1 of the substantially flat article 2 (in particular, of each substantially flat article 2 that moves on the conveyor 6); a second detection step, during which at least one additional detector 32 inspects the above-described longitudinal edges B2 of the substantially flat article 2 (in particular, of each substantially flat article 2 that moves on the conveyor 10), and an analysis step during which, based on what is detected in these detection steps, any defective substantially flat articles 2, or articles 2 that have defects, are identified.

This invention has numerous advantages, of which we cite the following.

The handling method and system 1 described above make it possible to create orders to be shipped 3 that also have different types of substantially flat articles 2 totally automatically.

Specifically, this invention, thanks to the inclusion of the conveyors 6 and 10 described above and two gripping devices 9, 14, makes it possible to speed up the process for forming an order to be shipped 3, the two gripping devices 9, 14 may actually operate at the same time so that, while the gripping device 9 selectively moves the articles 2 on the conveyor 6, the gripping device 14 transfers additional substantially flat articles 2 to the forming unit 12. This, as well as speeding up the process of forming orders to be shipped 3, makes it possible to minimise the machine stoppage times.

In addition, this invention makes it possible to handle the substantially flat articles 2 to form orders to be shipped 3 rapidly and efficiently by means of a handling system 1 that has limited dimensions and has a shape that adapts well to any article 2 production plant, and which can easily be inserted in rooms conventionally intended to house such handling systems 1.

## Claims

1. A handling system (1) to handle substantially flat articles (2) so as to form at least one order to be shipped; the handling system (1) comprises:
a plurality of storage units (5), each comprising at least one substantially flat article (2) of a given type;
a first conveyor (6), which extends from a first station (5) to a second station (8) in a first conveying direction (A) and is configured to support and convey at least one substantially flat article (2);
a second conveyor (10), which extends from said second station (8) to a third station (11) in a second conveying direction (B), orthogonal to said first direction (A), and is configured to support and convey at least one substantially flat article (2);
a first gripping device (9), which can be operated in order to take a substantially flat article (2) from one of said storage units (5) and release it onto said first conveyor (6);
a forming unit (12) to form an order to be shipped (3), which comprises at least one support (13) designed to receive at least one substantially flat article (2) to be shipped;
a second gripping device (14), which can be operated in order to take said at least one substantially flat article (2) from said second conveyor (10) and release it so that it rests on said support (13) of said forming unit (12); and
an integrity control assembly (26) configured to inspect said at least one substantially flat article (2) and identify possible defects; and a rejection device (27), which can be operated, based on the detection of said integrity control assembly (26), when said substantially flat article (2) has defects so as to transfer it to a rejection station (28) .

2. The handling system (1) according to claim 1, wherein said first gripping device (9) comprises: a first gripping head (15), which is configured to grab and release at least one substantially flat article (2); and a moving body (16), which is movable in a first work area extending at least between said storage units (5) and said first conveyor (6) so as to allow said at least one substantially flat article (2) to be moved from said storage units (5) to said first conveyor (6).

3. The handling system (1) according to claim 2, wherein:
at least part of the storage units (5) of said plurality of storage units (5) are arranged on a first side of said first conveyor (6) aligned with one another parallel to said first conveying direction (A);
the handling system (1) comprises a track (19), which extends parallel to the first conveying direction (A) between said first conveyor (6) and said at least part of the storage units (5); and
said moving body (16) of said first gripping device (9) is coupled to said track (19) in a sliding manner.

4. The handling system (1) according to any one of the preceding claims, wherein said second gripping device (14) comprises: a second gripping head (20) configured to grab and release at least one substantially flat article (2); and a support structure (21) configured to carry, in a hanging manner, said second gripping head (20) so that the latter is movable in a second work area extending at least between said second conveyor (10) and said forming unit (12) in order to allow said at least one substantially flat article (2) to be moved from said second conveyor (10) (in particular, from said third station (11)) to said forming unit (12).

5. The handling system (1) according to claim 4, wherein said support structure (21) comprises (in particular, consists of) : a frame (22), which has at least one guide (23) (in particular, a pair of guides (23), each) extending parallel to said second conveying direction (B); a beam (24), which is coupled to said at least one guide (23) in a sliding manner; and a connection assembly (25), which is coupled to said beam (24) in a sliding manner, is configured to carry said second gripping head (20) and can be operated so as to move said second gripping head (20) along a third direction (Z), which is orthogonal to said first conveying direction (A) and to said second conveying direction (B).

6. The handling system (1) according to any one of the preceding claims, wherein the integrity control assembly (26) is arranged at said second station (8) and comprises:
a first gantry (29), which extends above said first conveyor (6) and carries at least one first detector (30) configured to inspect two first edges (B1) of said at least one substantially flat article (2), which, in use, extend parallel to said second conveying direction (B); and
a second gantry (31), which extends above said second conveyor (10) and carries at least one further detector (32) configured to inspect two further edges (B2) of said at least one substantially flat article (2), which, in use, extend parallel to said first conveying direction (A).

7. The handling system (1) according to any one of the preceding claims, wherein:
the second conveyor (10) comprises (in particular, consists of) a plurality of belts (33) and/or rollers, which extend parallel to said conveying direction (B) and define a transport plane; and
the rejection device (27) comprises: a series of rollers (34), which are arranged one after the other along a direction (C) perpendicular to said direction (B) and extend between said belts (33) and/or said rollers of said plurality of belts (33) and/or rollers parallel to said conveying direction (B), and moving means configured to move said plurality of rollers (34) between a rest position, in which said rollers (34) of the plurality of rollers (34) are arranged at a lower height than the height of said belts (33) and/or of said rollers so as not to interfere with said transport plane, and an operating position, in which said rollers (34) are lifted up to a height that is at least the same as the height of said plurality of belts (33) and/or rollers so as to receive a substantially flat article (2), so that it rests on them, from said transport plane and convey it to said rejection station (28).

8. The handling system (1) according to any one of the preceding claims, wherein said support (13) of the forming unit (12) is configured to receive said at least one substantially flat article (2) arranged edgeways and the forming unit (12) comprises a strapping machine (35) configured to apply at least one sealing strap around said at least one substantially flat article (2) and said support (13), which form said order to be shipped (3), so as to tie them together.

9. The handling system (1) according to any one of the claims from 2 to 8, wherein each one of said storage units (5) comprises a support (17), which is configured to carry said at least one substantially flat article (2) of a given type, and a moving assembly (18) configured to move said support (17) between a first position on the inside of said first work area of said first gripping device (9) and a second position on the outside of said first work area of said first gripping device(9).

10. A handling method to handle substantially flat articles (2) and form an order to be shipped (3); the handling method comprises the following steps:
a feeding step, during which a plurality of storage units (5) are provided, each comprising at least one substantially flat article (2) of a given type;
a transfer step, during which a first gripping device (9) selectively takes at least one first substantially flat article (2) from a storage unit (5) of said plurality of storage units (5) and releases it onto a first conveyor (6), which extends from a first station (5) to a second station (8) in a first conveying direction (A);
a first conveying step, during which said first conveyor (6) moves said at least one first substantially flat article (2) to said second station (8) in said first conveying direction (A);
a second conveying step, during which a second conveyor (10), which extends from said second station (8) to a third station (11) in a second conveying direction (B), orthogonal said first conveying direction (A), receives said at least one first substantially flat article (2) from said first conveyor (6) and moves it to said third station (11) in said second conveying direction (B);
a forming step, during which a second gripping device (14) takes said at least one first substantially flat article (2) from said second conveyor (10), transfers it to a forming unit (12) comprising at least one support (13) and releases it onto said support so as to form an order to be shipped (3); and
an integrity control step, during which an integrity control assembly (26) inspects said at least one substantially flat article (2) and identifies possible defects; and a rejection step, which is at least partially subsequent to said integrity control step and during which, based on the detection of said integrity control assembly (26), a rejection device (27) is activated, when said substantially flat article (2) has defects, and transfers said substantially flat article (2) with a defect from said second conveyor (10) to a rejection station (28).

11. The handling method according to claim 10, wherein said forming step comprises an arrangement sub-step, during which said second gripping device (14) places said at least substantially flat article (2) oriented edgeways on said at least one support (13); and a stabilization sub-step, which is at least partially subsequent to said arrangement sub-step and during which a strapping machine (35) applies a sealing strap around said at least one substantially flat article (2) and said support (13), which form said order to be shipped (3), so as to tie them together.

12. The handling method according to claim 10 or 11 carried out with a handling system (1) according to one of the claims from 1 to 9.
